# EUROPÄISCHE PATENTSCHRIFT

(11) **EP 1 758 781 B1**
(45) Veröffentlichungstag und Bekanntmachung des Hinweises auf die Patenterteilung: **02.01.2008**
(21) Anmeldenummer: 05762988.3
(22) Anmeldetag: 10.06.2005
(51) Int. Cl.: B61L 21/00

(54) **VERFAHREN ZUR PLANUNG VON FAHRSTRASSEN FÜR STELLWERKE**
METHOD FOR PLANNING ROUTES FOR SIGNAL BOXES
PROCEDE POUR PLANIFIER DES ITINERAIRES POUR DES POSTES D'AIGUILLAGE

(30) Priorität: 24.06.2004 DE 102004031910
(43) Veröffentlichungstag der Anmeldung: 07.03.2007
(73) Patentinhaber: Siemens AG, 80333 München (DE)
(72) Erfinder: ECKERT, Uwe, 38126 Braunschweig (DE); KEUNE, Andreas, 38124 Braunschweig (DE); REITER, Frank, 38229 Salzgitter (DE)
(86) Internationale Anmeldenummer: PCT/DE2005/001072
(87) Internationale Veröffentlichungsnummer: WO 2006/000182

(56) Entgegenhaltungen:
- EP-A- 0 581 281
- EP-A- 1 288 099
- WO-A-00/10860
- DE-A1- 19 750 465
- PETERSEN K ET AL: "TOOLCHAIN ESTWL90-PROJEKTIEREN MIT PROMAT" SIGNAL + DRAHT, TELZLAFF VERLAG GMBH. DARMSTADT, DE, Bd. 84, Nr. 10, 1. Oktober 1992 (1992-10-01), Seiten 288-294, XP000345101 ISSN: 0037-4997

## Beschreibung

Die Erfindung betrifft ein Verfahren zur Planung von Fahrstraßen und deren Flankenschutz, um Verschlusspläne für Stellwerke gemäß dem Oberbegriff des Anspruchs 1 zu erstellen.

Ein Verschlussplan (auch Verschlusstafel, Verschlusstabelle Fahrstraßentabelle) ist eine tabellarische Darstellung der Fahrstraßenlogik eines Stellwerks. Dabei wird in der Regel jede Fahrstrasse durch eine Zeile in einer Matrix abgebildet, wobei die Felder jeder Zeile Informationen enthalten, in welchem Zustand sich ein Fahrwegelement (Fahrstraßenelement) für eine bestimmte Fahrstrasse befinden muss. Flankenschutz ist eine Schutzmassnahme für Fahrstrassen, damit an Weichen und Kreuzungen ("Flankenschutz suchenden Elementen") keine anderen Fahrzeuge in die Flanke des die eingestellte Fahrstrasse benutzenden Zuges fahren können. Flankenschutz können z.B. Weichen in abweisender Stellung und Halt zeigende Signale bieten. Flankenschutzraum ist der Bereich zwischen einem Flankenschutz bietendem Fahrwegelement und dem zu schützenden Fahrweg.

Es ist bekannt, bei der Planung von Fahrstraßen für Stellwerke einschließlich des zugehörigen Flankenschutzes ein Abbild der Topologie des Stellwerks auf einer Zeichnung zu erstellen. Diese enthalten unter anderem Gleisabschnitte, Weichen und Signale, aus denen die Fahrstraßen gebildet werden. Zum Editieren werden einzelne Fahrstraßen und der zugehörige Flankenschutz ausgewählt und gekennzeichnet. Die Auswahl erfolgt immer für eine einzelne Fahrstraße; dabei ist es aber auch möglich, zwei oder mehrere Fahrstraßen auszuwählen und gemeinsam zu editieren. Das Editieren eines Flankenschutzes einer Fahrstraße bedeutet, die Zuordnung von Flankenschutz suchenden zu Flankenschutz bietenden Elementen zu verändern. Zum Flankenschutz gehört auch der Flankenschutzraum. Anhand der Planung werden dann die entsprechenden Verschlusspläne erstellt.

Die bekannten Planungsverfahren haben den Nachteil, dass sie sehr zeit- und kostenaufwendig sind.

Die Aufgabe der Erfindung ist es, ein Planungsverfahren vorzuschlagen, das schnell durchführbar und kostengünstig ist.

Die Lösung sieht vor, dass zur Erzeugung des graphischen Abbilds eine rechnergesteuerte graphische Oberfläche vorgesehen ist, auf der die Topologie aus dafür vorgesehenen Fahrstraßenelementen gebildet wird, dass der Rechner anhand der funktionsmäßig verbundenen Fahrstraßenelemente (bzw. Fahrwegelementen) Fahrstraßen ermittelt, dass die Planung jeweils für die Fahrstraßen einschließlich des zugehörigen Flankenschutzes erfolgt, wobei die jeweils ausgewählte zumindest eine Fahrstraße zusammen mit ihren den zugehörigen Flankenschutz bildenden Fahrstraßenelementen auf der graphischen Oberfläche optisch hervorgehoben in der Grafik editiert wird und dass weitere Fahrstraßen jeweils allein durch Vorgabe von Start und Ziel durch den Rechner ermittelt werden können. Die Fahrstraßenelemente müssen also nur auf der Oberfläche ausgewählt und an die entsprechende Position innerhalb des Abbildes der Topologie geschoben zu werden.

Der Rechner unterstützt das Planungsverfahren durch die Ermittlung von Fahrstraßen, wobei deren Daten und die Änderungen nach dem Editieren einschließlich des zugehörigen Flankenschutzes jeweils aktuell in einer Datei abgelegt werden. Der Verschlussplan wird anhand der jeweils aktuellen Datei ebenfalls vom Rechner erstellt.

Das Verfahren vereinfacht sich, wenn die Datei als Datenbank ausgebildet ist.

Die Handhabung des Verfahrens lässt sich verbessern, wenn die Fahrstraßenelemente, insbesondere die des Flankenschutzes, zum Editieren in der Grafik markiert und bezüglich ihrer Funktion im Zusammenhang mit der Fahrstraße editiert werden.

Eine zügige Durchführung des Verfahrens ergibt sich, wenn der Rechner im Hintergrund selbständig jede Änderung der Fahrstraßen und des Flankenschutzes auf der graphischen Oberfläche in der Datei aktualisiert.

Der Verschlussplan wird im einfachsten Fall als Tabelle ausgegeben.

Zum effektiven Einsatz der Verschlusspläne wird vorgeschlagen, dass die Tabelle eine standardisierte Form aufweist.

Zweckmäßigerweise erfolgt die Bildung der Topologie anhand eines Lageplans, wobei die ausgewählten Fahrstraßenelemente auf der grafischen Oberfläche an die dem Lageplan entsprechende Position geschoben und funktionsmäßig verbunden werden.

Effektiv ist es, wenn die Daten für eine vorgesehene Anlagenprojektierung selbsttätig übernommen werden.

Die Kosten des Verfahrens lassen sich reduzieren, wenn die grafische Oberfläche von einem Grafik-Anwendungsprogramm, insbesondere VISIO 2000, gebildet wird.

Das erfindungsgemäße Verfahren zur Planung von Fahrstraßen wird nachfolgend anhand einer Zeichnung näher beschrieben. Es zeigen:
- Figur 1: ausgewählte Fahrstraßenelemente auf einer grafischen Oberfläche,
- Figur 2: die miteinander verbundenen Fahrstraßenelemente gemäß Figur 1 und
- Figur 3: eine ausgewählte Fahrstraße mit zugehörigem Flankenschutz.

Das Verfahren zur Planung von Fahrstraßen umfasst die Erzeugung eines grafischen Abbilds der Topologie eines Stellwerks anhand von dessen Lageplan(nicht gezeigt), wobei Fahrstraßenelemente 1 ausgewählt und auf einer grafischen Oberfläche eines Grafik-Anwendungsprogramms, von einer Planungsperson angeordnet werden.

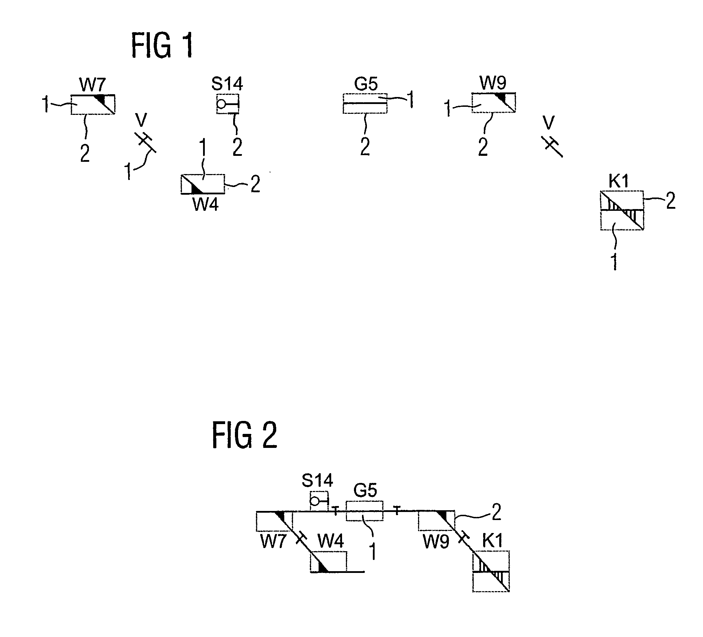

Figur 1 zeigt die grafische Oberfläche mit aus einem Reservoir ausgewählten Fahrstraßenelementen 1. Die Auswahl kann dabei mittels einer Computermaus erfolgen, wobei das gewünschte Fahrstraßenelement mit Hilfe des Mauszeigers auf die grafische Oberfläche gezogen wird.

Bei den Fahrstraßenelementen in Figur 1 handelt es sich um Weichen W (W4, W7, W9), ein Signal S (S14), einen Gleisabschnitt G (G5), eine Kreuzung K (K1) sowie zwei Verbinder V. Bis auf die Verbinder V sind die Fahrstraßenelemente 1 mit einem gepunkteten Rahmen 2 versehen, um anzudeuten, dass es sich um Elemente als ganzes handelt.

Die ausgewählten Fahrstraßenelemente 1 werden auf der grafischen Oberfläche jeweils an die dem Lageplan entsprechende Position geschoben und funktionsmäßig miteinander verbunden. Letztes kann durch Ziehen der Endpunkte eines Verbinders V auf einen Anschlusspunkt eines Fahrstraßenelements 1 erfolgen.

Figur 2 zeigt die an die entsprechenden Stellen geschobenen und funktionsmäßig miteinander verbundenen Fahrstraßenelemente 1 der Figur 1.

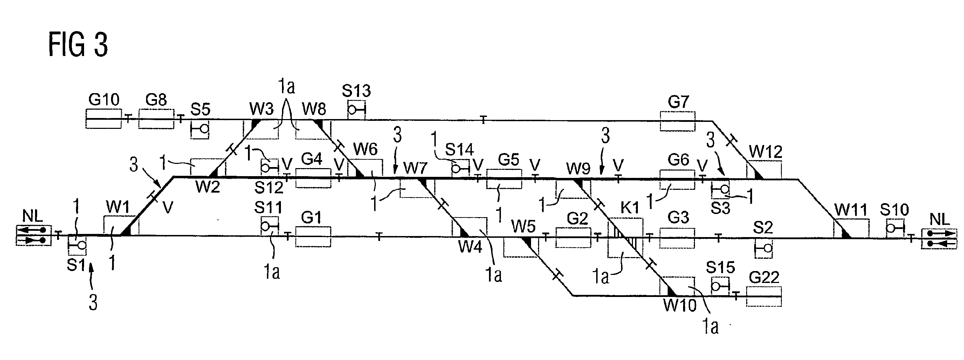

Anhand der funktionsmäßig verbundenen Fahrstraßenelemente 1 ermittelt der Rechner eine Vielzahl von möglichen Fahrstraßen 3 (s. Figur 3), deren Daten in einer Datenbank abgelegt werden. Die Ablage kann selbstverständlich auch in einer Datei erfolgen. Jedem Element einer Fahrstraße 3 werden die Fahrstraßenelemente 1 zugeordnet, die dessen Flankenschutz bilden. Auch deren Daten werden in der Datenbank abgelegt. Weiter ist es möglich, dass die Planungsperson den Rechner durch Vorgabe von Start und Ziel weitere Fahrstraßen 3 bilden lässt.

Zur Editierung kann jeweils eine Fahrstraße 3 ausgewählt und mit ihrem Flankenschutz auf der grafischen Oberfläche optisch hervorgehoben angezeigt werden.

Figur 3 zeigt eine solche ausgewählte Fahrstraße 3 zusammen mit den Fahrstraßenelementen 1, die ihren Flankenschutz bilden. Die Fahrstraße 3 ist in Figur 3 dadurch optisch hervorgerufen, dass die durchgehend verlaufende Fahrstraßenlinie dicker gezeichnet ist; sie wird der Reihe nach von links nach rechts von den Fahrstraßenelementen 1 S1, W1, W2, S12, G4, W6, W7, S14, G5, W9, G6, S3 gebildet, welche jeweils durch Verbinder V verbunden sind. Vorteilhafter ist eine farbige Hervorhebung der ausgewählten Fahrstraße 3. Dabei können die Fahrstraßenelemente 1, die den Flankenschutz bilden, außerdem in einer anderen Farbe dargestellt werden. In Figur 3 sind die Fahrstraßenelemente 1, die den Flankenschutz der Fahrstraße 3 bilden, mit 1a bezeichnet. Dazu gehören die Weichen W3, W4, W8, W10, das Signal S11 und die Kreuzung K1.

Zum Editieren können die einzelnen Fahrstraßenelemente 1 des Flankenschutzes mit einer Computermaus markiert und bezüglich ihrer Funktion im Zusammenhang mit der Fahrstraße anschließend editiert werden. So ist es beispielsweise möglich, die Lage der Weiche W4 bei der Editierung umzustellen oder die Weiche W3 aus dem Flankenschutz zur Weiche W2 zu entfernen und durch das Signal S13 zu ersetzen.

Gegebenenfalls können auch zwei oder mehr Fahrstraßen 3 gemeinsam markiert und im oben beschriebenen Sinne zusammen editiert werden.

Alle Editierungen werden vom Rechner selbsttätig in der Datei festgehalten, beispielsweise durch Überschreiben der entsprechenden Informationen. Dabei kann der Rechner im Hintergrund selbstständig jede Änderung der Fahrstraße 3 und des Flankenschutzes auf der grafischen Oberfläche in der Datei aktualisieren.

Nach dem Editieren aller Fahrstraßen des Stellwerks wird ein Verschlussplan in Form einer standardisierten Tabelle ausgegeben. Diese Daten können anschließend für eine vorgesehene Anlageprojektierung selbsttätig übernommen werden.

## Patentansprüche

1. Verfahren zur Planung von Fahrstraßen (3) für Stellwerke, bei dem dessen Topologie unter Verwendung von graphischen Hilfsmitteln als graphisches Abbild erfasst, zumindest die Fahrstraßen (3) ermittelt sowie editiert und anschließend in einem Verschlussplan gesichert werden,
wobei zum Editieren jeweils zumindest einzelne Fahrstraßen (3) ausgewählt werden,
**dadurch gekennzeichnet,**
**dass** zur Erzeugung des graphischen Abbilds eine rechnergesteuerte graphische Oberfläche vorgesehen ist, auf der die Topologie aus dafür vorgesehenen Fahrstraßenelementen (1) gebildet wird,
**dass** der Rechner anhand der funktionsmäßig verbundenen Fahrstraßenelemente (1) Fahrstraßen (3) ermittelt,
**dass** die Planung jeweils für die Fahrstraßen (3) einschließlich des zugehörigen Flankenschutzes erfolgt,
wobei die jeweils ausgewählte zumindest eine Fahrstraße (3) zusammen mit ihren den zugehörigen Flankenschutz bildenden Fahrstraßenelementen (1) auf der graphischen Oberfläche optisch hervorgehoben in der Grafik editiert wird und
**dass** weitere Fahrstraßen (3)jeweils allein durch Vorgabe von Start und Ziel durch den Rechner ermittelt werden können.

2. Verfahren nach Anspruch 1,
**dadurch gekennzeichnet,**
**dass** die Daten der Fahrstraßen (3) und die Änderungen nach dem Editieren in einer Datei abgelegt werden und anhand der aktualisierten Datei der Verschlussplan erstellt wird.

3. Verfahren nach Anspruch 2,
**dadurch gekennzeichnet,**
**dass** die Datei eine Datenbank ist.

4. Verfahren nach Anspruch 1 - 3,
**dadurch gekennzeichnet,**
**dass** die Fahrstraßenelemente (1), insbesondere die des Flankenschutzes, zum Editieren in der Grafik markiert und bezüglich ihrer Funktion im Zusammenhang mit der Fahrstraße (3) editiert werden.

5. Verfahren nach einem der Ansprüche 1 - 4,
**dadurch gekennzeichnet,**
**dass** der Rechner im Hintergrund selbständig jede Änderung der Fahrstraßen (3) und des Flankenschutzes auf der graphischen Oberfläche in der Datei aktualisiert.

6. Verfahren nach einem der Ansprüche 1 - 5,
**dadurch gekennzeichnet,**
**dass** der Verschlussplan als Tabelle ausgegeben wird.

7. Verfahren nach Anspruch 6,
**dadurch gekennzeichnet,**
**dass** die Tabelle eine standardisierte Form aufweist.

8. Verfahren nach einem der Ansprüche 1 - 7,
**dadurch gekennzeichnet,**
**dass** für die Bildung der Topologie die Fahrstraßenelemente (1) anhand eines Lageplans ausgewählt und auf der graphischen Oberfläche an die dem Lageplan entsprechende Position geschoben und funktionsmäßig verbunden werden.

9. Verfahren nach einem der Ansprüche 1 - 8,
**dadurch gekennzeichnet,**
**dass** die graphische Oberfläche von einem Grafik-Anwendungsprogramm gebildet wird.

## Claims

1. Method for planning routes (3) for signal boxes, in which the signal boxes' topology is recorded as a graphical depiction using graphical aids, at least the routes (3) are ascertained and edited and then these are saved in an interlocking plan,
where at least single routes (3) are respectively selected for editing,
charaterized
in that in order to produce the graphical depiction a computer-controlled graphical interface is provided on which the topology is formed from route elements (1) provided for the purpose,
in that the computer uses the functionally connected route elements (1) to ascertain routes (3),
in that the planning is respectively done for the routes (3), including the associated flank protection, with the respectively selected at least one route (3) together with its route elements (1), which form the associated flank protection, being edited in the graphic in a manner visually highlighted on the graphical interface, and
in that further routes (3) can respectively be ascertained by the computer merely by prescribing the start and destination.

2. Method according to claim 1,
**characterized**
**in that** the data from the routes (3) and the changes after editing are stored in a file and the updated file is used to create the interlocking plan.

3. Method according to claim 2,
**characterized**
**in that** the file is a database.

4. Method according to claims 1-3,
**characterized**
**in that** the route elements (1), particularly those from the flank protection, are marked in the graphic for the purpose of editing and have their function edited in connection with the route (3).

5. Method according to one of claims 1-4,
**characterized**
**in that** the computer automatically updates each change to the routes (3) and to the flank protection on the graphical interface in the file in the background.

6. Method according to one of claims 1-5,
**characterized**
**in that** the interlocking plan is output as a table.

7. Method according to claim 6,
**characterized**
**in that** the table has a standardized form.

8. Method according to one of claims 1 - 7,
**characterized**
**in that** to form the topology the route elements (1) are selected using a layout plan and are moved on the graphical interface to the position corresponding to the layout plan and are functionally connected.

9. Method according to one of claims 1-8,
**characterized**
**in that** the graphical interface is formed by a graphics application program.

## Revendications

1. Procédé pour planifier des itinéraires (3) destiné à des postes d'aiguillage, d'après lequel sa topologie est enregistrée en utilisant des auxiliaires graphiques comme représentation graphique, au moins les itinéraires (3) sont déterminés et édités et ensuite sauvegardés dans un plan de fermeture,
en sélectionnant respectivement au moins des itinéraires (3) particuliers pour l'édition,
**caractérisé**
**en ce que**, pour produire la représentation graphique, on prévoit une surface graphique commandée par ordinateur et sur laquelle la topologie est représentée à partir d'éléments d'itinéraire (1) prévus à cet effet,
**en ce que** l'ordinateur établit des itinéraires (3) à l'aide des éléments d'itinéraire (1) reliés fonctionnellement,
**en ce que** la planification s'effectue respectivement pour les itinéraires (3), y compris la protection contre la convergence d'itinéraires correspondante, en éditant sur le graphique tout en le faisant ressortir visuellement sur la surface graphique l'au moins un itinéraire (3) respectivement sélectionné conjointement avec ses éléments d'itinéraire (1) qui forment la protection correspondante contre la convergence d'itinéraires,
et **en ce que** d'autres itinéraires (3) peuvent être déterminés par l'ordinateur en se bornant à chaque fois à spécifier le point de départ et la destination.

2. Procédé selon la revendication 1, **caractérisé en ce que** les données des itinéraires (3) et les modifications après l'édition sont enregistrées dans un fichier et le plan de fermeture est élaboré à l'aide du fichier mis à jour.

3. Procédé selon la revendication 2, **caractérisé en ce que** le fichier est une base de données.

4. Procédé selon les revendications 1 à 3, **caractérisé en ce que** les éléments d'itinéraire (1), en particulier ceux de la protection contre la convergence d'itinéraires, sont repérés pour l'édition sur le graphique et sont édités en se référant à leur fonction en relation avec l'itinéraire (3).

5. Procédé selon l'une des revendications 1 à 4, **caractérisé en ce que** l'ordinateur met indépendamment à jour en arrière-plan sur la surface graphique dans le fichier chaque modification des itinéraires (3) et de la protection contre la convergence d'itinéraires.

6. Procédé selon l'une des revendications 1 à 5, **caractérisé en ce que** le plan de fermeture est édité sous forme de tableau.

7. Procédé selon la revendication 6, **caractérisé en ce que** le tableau a une forme normalisée.

8. Procédé selon l'une des revendications 1 à 7, **caractérisé en ce que**, pour former la topologie, les éléments d'itinéraires (1) sont sélectionnés à l'aide d'un plan de situation et sont poussés sur la surface graphique à la place qui correspond au plan de situation et sont reliés fonctionnellement.

9. Procédé selon l'une des revendications 1 à 8, **caractérisé en ce que** la surface graphique est formée par un logiciel d'application graphique.
